# EUROPÄISCHE PATENTANMELDUNG

(11) **EP 3 150 444 A1**
(43) Veröffentlichungstag der Anmeldung: **05.04.2017**
(21) Anmeldenummer: 16401059.7
(22) Anmeldetag: 12.09.2016
(51) Int. Cl.: B60R 16/02, F16L 3/137, H02G 3/00, H02G 3/32

(54) **LEITUNGSHALTER**

(30) Priorität: 02.10.2015 DE 102015116743
(71) Anmelder: Amazonen-Werke H. Dreyer GmbH & Co. KG, 49205 Hasbergen (DE)
(72) Erfinder: Holtkötter, Christian, 33775 Versmold (DE); Wolf, Jan, 49078 Osnabrück (DE); Schiermann, Stefan, 48432 Rheine (DE)

(57) **Zusammenfassung**

Leitungshalter 4, an dem mit zumindest einem streifenartigen Befestigungselement 10 Leitungen 11, wie Kabel, Schläuche, etc. zu befestigen sind und die zumindest einen streifenartigen und/oder zungenartigen Halterungsfinger 5 aufweisen, wobei an dem Halterungsfinger 5 mittels des streifenartigen Befestigungselementes 10 die zu befestigende Leitung 11 zu befestigen ist. Um Beschädigungen der zu befestigenden Leitungen zu vermeiden, ist vorgesehen, dass der Halterungsfinger 5 aus einem weicheren Material als die zu befestigende Leitung 11 besteht.

## Beschreibung

Die Erfindung betrifft einen Leitungshalter gemäß des Oberbegriffes des Patentanspruches 1.

Ein derartiger Leitungshalter ist in DE 93 05 984 U1 beschrieben. Dieser Leitungshalter ist derart ausgeführt, dass an ihm mit zumindest einem streifenartigen Befestigungselement Leitungen, wie Kabel, Schläuche, etc. befestigt sind. Der Leitungshalter weist zumindest einen streifenartigen und/oder zungenartigen Halterungsfinger auf. An diesem Halterungsfinger ist mittels des streifenartigen Befestigungselementes die zu befestigende Leitung zu befestigen.

Ein solcher Leitungshalter ist häufig als gestanztes Blech- oder als geformtes Kunststoffteil ausgeführt, wobei bei der Herstellung aufgrund des harten Materials scharfe Kanten oder Grate zurückbleiben. Diese können die zu befestigenden Leitungen beschädigen, insbesondere über einen längeren Zeitraum aufreiben oder aufscheuern.

In vielen Anwendungsgebieten und insbesondere bei vielen Maschinen in der Landtechnik besteht die Notwendigkeit, Leitungen, wie Kabel oder Schläuche, in geeigneter Weise dauerhaft, d. h. vor allem sicher und verschleißfrei zu führen. Dem steht entgegen, dass insbesondere bei der Bewegung einer landwirtschaftlichen Maschine Relativbewegungen zwischen einzelnen Bauteilen, wie z. B. Leitungen und den bekannten Halterungen, auftreten können. Durch diese Relativbewegungen werden in Kombination mit harten Materialien und Bauteilkanten die weichen, flexiblen Ummantelungen der Leitungen beschädigt.

Der Erfindung liegt die Aufgabe zugrunde, Beschädigungen an den zu befestigenden Leitungen mit einfachen Mitteln zu vermeiden.

Diese Aufgabe wird erfindungsgemäß dadurch gelöst, dass der Halterungsfinger aus einem weicheren Material als die zu befestigende Leitung besteht.

In Folge dieser Maßnahme ergeben sich folgende Vorteile: Das weiche Material verhindert auch bei Kontakt von Leitungshalter und zu befestigenden Leitungen Beschädigungen an diesen Leitungen. Bei entsprechender Materialkombination kommt es nicht zu einem Aufscheuern der zu befestigenden Leitung.

Der erfindungsgemäße Halterungsfinger besteht aus einem elastischen Material, wie Gummi oder Kunststoff, sodass den befestigten Leitungen ein Bewegungsspielraum verbleibt, der geeignet ist, auftretende Bewegungen wie Vibrationen oder dergleichen abzufangen. Dadurch wird die Gefahr, die Leitungen zu beschädigen, beispielsweise aufzuscheuern, weiter reduziert.

Der Leitungshalter ist kammartig ausgebildet und weist kammartige Zähne auf, diese Zähne sind die Halterungsfinger des kammartigen Befestigungselementes und bilden die Befestigungsbereiche zum Befestigen der Leitungen. Dadurch können je nach Bedarf mehrere Leitungen auf die Menge der verfügbaren Finger verteilt oder mehrere Finger genutzt werden, um größere Leitungen und/oder Leitungsbündel zu befestigen.

Die Befestigung an den Halterungsfingern erfolgt durch die Verwendung von streifenartigen Befestigungsmitteln, vorzugsweise Kabelbindern. Somit können befestigte Leitungen bei Bedarf schnell und kostengünstig wieder gelöst und neu verteilt und/oder angeordnet werden. Zudem ist es somit möglich, weitere Leitungen hinzuzufügen oder nicht benötigte zu entfernen.

Die Halterungsfinger sind an ihren freien Enden breiter und/oder dicker als in ihrem Anschlussbereich an dem Quersteg des Leitungshalters ausgebildet. Diese Maßnahme verhindert ein Abrutschen des streifenförmigen Befestigungsmittels, wobei zusätzlich der weiche, elastische Werkstoff der Halterungsfinger durch Verformung bei Festziehen der streifenförmigen Befestigungsmittel unterstützend wirkt.

Zudem sind die einzelnen Halterungsfinger an ihren freien Enden abgerundet ausgeführt. Diese Form ist beim Überstülpen eines bereits geschlossenen aber noch nicht festgezogenen Kabelbinders hilfreich.

Der Leitungshalter kann an beliebiger Stelle an einem landwirtschaftlichen Gerät befestigt werden, je nach dem, an welchen Stellen eine Befestigung der Leitung sinnvoll oder erforderlich ist. Durch dieses Merkmal ist der Einsatz des Leitungshalters an einer Vielzahl landwirtschaftlicher Maschinen möglich, bei denen das geordnete und verschleißfreie Verlegen und/oder Führen von Leitungen erforderlich und/oder sinnvoll ist.

Durch den weicheren Werkstoff der Erfindung gegenüber dem der zu befestigenden Leitungen, kann keine Beschädigung der Leitungen, z. B. durch Aufscheuern, auftreten.

Weitere Einzelheiten der Erfindung sind der Beispielsbeschreibung und den Zeichnungen zu entnehmen. Die Zeichnungen zeigen
- Fig.1: einen Vorratsbehälter einer landwirtschaftlichen Feldspritze mit angebrachten kammartigen Leitungshaltern in perspektivischer Ansicht von schräg hinten,
- Fig.2: den an dem Vorratsbehälter nach Fig.1 angebrachten kammartigen Leitungshalter in vergrößerter Ansicht mit erfindungsgemäßer Verwendung eines streifenartigen Befestigungselements, hier Kabelbinder,
- Fig.3: den Vorratsbehälter einer landwirtschaftlichen Feldspritze nach Fig.1 mit angebrachten kammartigen Leitungshaltern in perspektivischer Ansicht von schräg hinten mit beispielhaft als Kabelbindern ausgebildeten Befestigungselementen befestigten Leitungen,
- Fig.4: den an dem Vorratsbehälter angebrachten kammartigen Leitungshalter in vergrößerter Ansicht nach Fig.3 mit erfindungsgemäßer Verwendung eines streifenartigen Befestigungselements, hier nicht völlig zu gezogenem Kabelbinder, und damit zu befestigenden Leitungen,
- Fig.5: den an dem Vorratsbehälter angebrachten kammartigen Leitungshalter in vergrößerter Ansicht nach Fig.3 mit erfindungsgemäßer Verwendung eines streifenartigen Befestigungselements, hier fest zu gezogenem Kabelbinder, und damit befestigten Leitungen und
- Fig.6: den kammartigen Leitungshalter mit aus einem Quersteg hervorgehenden Befestigungsfingern.

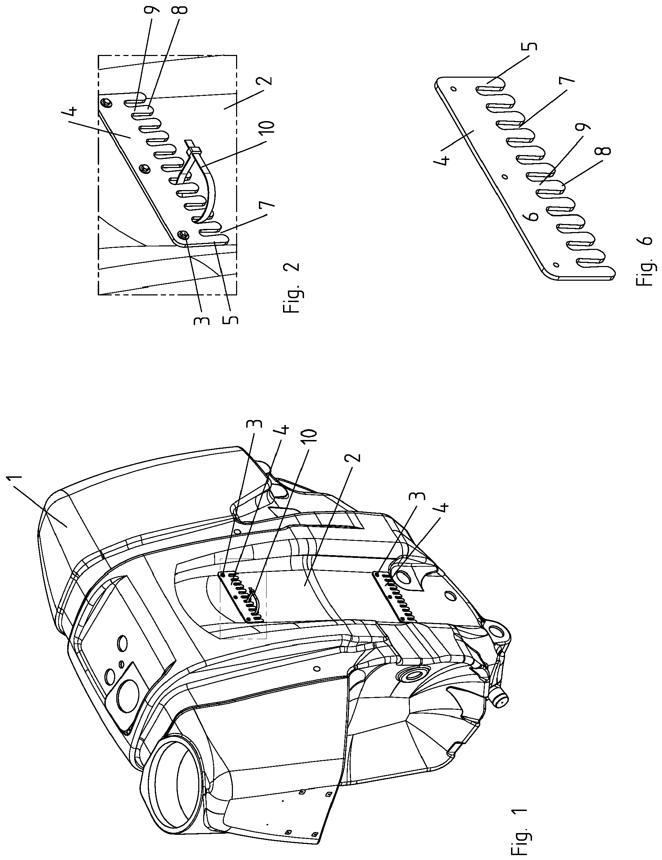

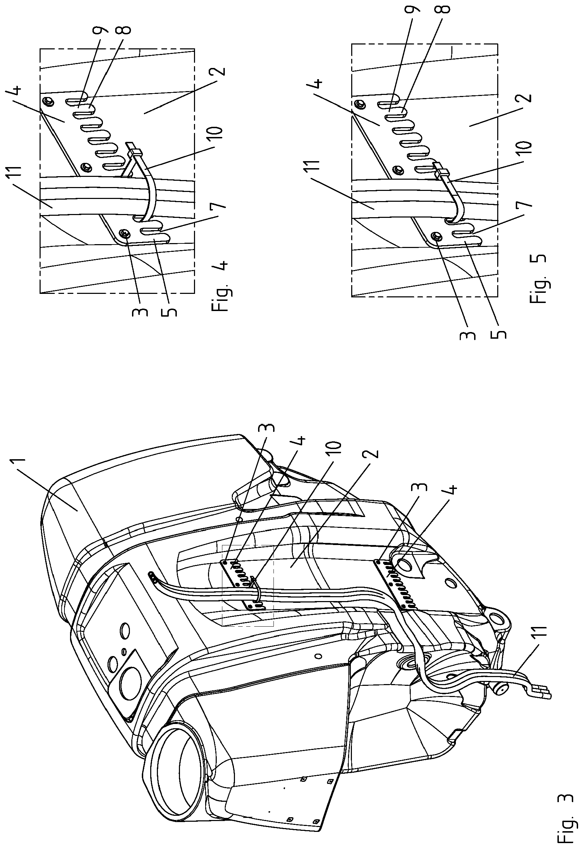

Die Fig. 1 zeigt den Brühebehälter 1 einer bekannten und daher nicht mit allen Bauteilen dargestellten, als Feldspritze ausgebildeten landwirtschaftlichen Maschine. An der Wand 2 dieses Behälters 1 sind mit geeigneten Befestigungselementen 3 zwei der erfindungsgemäßen kammartigen Leitungshalter 4 mit mehreren Halterungsfingern 5 angebracht. Fig.6 zeigt einen solchen kammartigen Leitungshalter 4, der einen Quersteg 6 aufweist, von dem die durch Freistellung oder Aussparung 7 erzeugten Halterungsfinger 5 abgehen, die an ihrem freien Ende 8 dicker und/oder breiter ausgeführt sind, als in ihrem Anschlussbereich 9 an den Quersteg 6. Dieses breitere freie Ende 8 entsteht durch kontinuierliche Verbreiterung der Halterungsfinger, beispielsweise beginnend im Anschlussbereich am Quersteg 6, wie Fig.6 zeigt oder durch die Ausformung verbreiterten Endteil der Halterungsfinger 5. Zudem ist das freie Ende 8 der Halterungsfinger 5 abgerundet 7 ausgebildet. In Fig.3 werden die zu befestigenden Leitungen 11 für ihre bestimmungsgemäße Verwendung geeignet positioniert. Sodann werden in Fig.3 die Leitungen 11 sowie eine geeignete Anzahl Halterungsfinger 5 mittels streifenförmigen Befestigungselementen 10, hier Kabelbindern, umschlossen und die Leitungen 11 an den Befestigungselementen 10 fest gezogen, wie es Fig.5 zeigt. Beim Überstülpen über die Halterungsfinger 5 eines um die Leitungen 9 geschlossenen, aber noch nicht festgezogenen Kabelbinders 10, sichtbar in Fig.4, hilft die abgerundete Form des freien Endes 8 des Halterungsfingers 5, die Fig.6 zeigt. Die geeignete Anzahl der benötigten Halterungsfinger 5 ergibt sich aus dem jeweiligen Bedarf, je nach Dicke oder Masse einer Leitung 11 oder eines Bündels von Leitungen 9. Im gewählten Beispiel zeigen die Fig.2 und die Fig.4 die Verwendung von zwei Halterungsfingern 5 für drei Leitungen 9, die allesamt von einem Kabelbinder 10 umschlossen werden. Durch das Festziehen des Kabelbinders 10 werden die Leitungen 9 an den Halterungsfingern 5 fixiert. Aufgrund des weichen Werkstoffes des Leitungshalters 4 nimmt der zur Befestigung genutzte und/oder die zur Befestigung genutzten Halterungsfinger 5 durch Anschmiegen die Form der zu befestigenden Leitung 11 und sorgt so für einen sichereren Halt der befestigten Leitung 11 am Halterungsfinger 5. Gleichzeitig wird durch das Festziehen des Kabelbinders 10 der weiche und elastische Werkstoff des Halterungsfingers 5 zusammengepresst. Die dadurch hervorgerufene Verformung verhindert in Kombination mit der erfindungsgemäßen Ausformung der Halterungsfinger 5 derart, dass sie an ihrem freien Ende 8 hin dicker und/oder breiter als in ihrem Anschlussbereich 9 am Quersteg 6, ein Abrutschen des Kabelbinders 10. Bei dieser erfindungsgemäßen Verwendung des Leitungshalters 4 ist die sichere und verschleißfreie Befestigung der zu befestigenden Leitungen 9 am weicheren und elastischen Leitungshalter 4 bei gleichzeitiger angemessener Bewegungsfreiheit zum Ausgleich kleinerer Relativbewegungen zwischen Behälter 1 und Leitungen 9 bei Bewegen des Behälters 1 auch im rauen landwirtschaftlichen Umfeld gewährleistet. Zwischen den Leitungen 9 und dem Leitungshalter 4 bzw. den Halterungsfingern 5 auftretende Reibung aufgrund möglicher Relativbewegungen zwischen Behälter 1 und Leitungen 9, kann die Leitung 11 nicht beschädigen, da das Material des Leitungshalters 4 weicher, als das der Leitung 11 ist.

## Patentansprüche

1. Leitungshalter (4), an dem mit zumindest einem streifenartigen Befestigungselement (10) Leitungen (11), wie Kabel, Schläuche, etc. zu befestigen sind und die zumindest einen streifenartigen und/oder zungenartigen Halterungsfinger (5) aufweisen, wobei an dem Halterungsfinger (5) mittels des streifenartigen Befestigungselementes (10) die zu befestigende Leitung (8) zu befestigen ist, **dadurch gekennzeichnet, dass** der Halterungsfinger (5) aus einem weicheren Material als die zu befestigende Leitung (11) besteht.

2. Leitungshalter (4) nach Anspruch 1, **dadurch gekennzeichnet, dass** der Halterungsfinger (5) aus einem elastischen Material, wie Gummi oder Kunststoff besteht.

3. Leitungshalter (4) nach zumindest einem der vorstehenden Ansprüche, **dadurch gekennzeichnet, dass** der Leitungshalter (4) kammartig ausgebildet ist und kammartige Zähne aufweist, dass die Halterungsfinger (5) die Zähne des kammartigen Befestigungselementes sind, die die Befestigungsbereiche zum Befestigen der Leitungen (11) bilden.

4. Leitungshalter (4) nach zumindest einem der vorstehenden Ansprüche, **dadurch gekennzeichnet, dass** an den Halterungsfingern (5) die Leitungen (11) mittels Kabelbindern (10) befestigbar sind.

5. Leitungshalter (4) nach zumindest einem der vorstehenden Ansprüche, **dadurch gekennzeichnet, dass** die Halterungsfinger (5) an ihren freien Enden breiter und/oder dicker als in ihrem Anschlussbereich (9) an dem Quersteg (6) des Leitungshalters (4) ausgebildet sind.

6. Leitungshalter (4) nach zumindest einem der vorstehenden Ansprüche, **dadurch gekennzeichnet, dass** die Halterungsfinger (5) an ihren freien Enden (8) abgerundet ausgeführt sind.

7. Leitungshalter (4) nach zumindest einem der vorstehenden Ansprüche, **dadurch gekennzeichnet, dass** der Leitungshalter (4) an beliebiger Stelle an einem landwirtschaftlichen Gerät (1) befestigt ist.
